(19) Europäisches Patentamt
European Patent Office
Office européen des brevets

(11) **EP 2 720 128 A1**

(12) **EUROPEAN PATENT APPLICATION**

(43) Date of publication:
**16.04.2014 Bulletin 2014/16**

(51) Int Cl.:
*G06F 3/0488* (2013.01)

(21) Application number: **12007003.2**

(22) Date of filing: **09.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Harman Becker Automotive Systems GmbH**
**76307 Karlsbad (DE)**

(72) Inventor: **Hansen, Lars**
**80939 München (DE)**

(74) Representative: **Koch Müller**
**Patentanwaltsgesellschaft mbH**
**Maaßstraße 32/1**
**69123 Heidelberg (DE)**

(54) **Navigation system and method for controlling a display**

(57)    A navigation system and a method for controlling a display, comprising the steps
- displaying a graphic (110) on a graphical user interface (100);
- ascertaining an entering of a curve (18, 28, 38, 48, 58, 68, 78);
- ascertaining a region (19, 29, 39, 49, 59, 69, 79) of the graphic (110) based on points (10, 11, 12, 17, 21, 22, 23, 24, 25, 31, 32, 33, 34, 41, 42, 43, 44), the points (10, 11, 12, 17, 21, 22, 23, 24, 25, 31, 32, 33, 34, 41, 42, 43, 44) being located on the entered curve (18, 28, 38, 48, 58, 68, 78);
- ascertaining a predefined first gesture from the curve (18, 28, 38, 48, 58, 68), and
- zooming In on the region (19, 29, 39, 49, 59, 69) of the graphic (110) when the first gesture is ascertained.

Fig. 1a

EP 2 720 128 A1

## Description

Various embodiments relate to a navigation system and a method for controlling a display.

A plurality of gestures is defined in "Motion Gestures," 2005 Apple Computer, Inc. For controlling a display a circular motion in the clockwise direction is defined for zooming in, and a circular motion in the counterclockwise direction is defined for zooming out.

According to one aspect an improvement to controlling a display is described through a method having the features of the independent claim 1. Various refinements are the subject matter of dependent claims and included in the description.

Accordingly, a method for controlling a display is provided comprising the steps:

- Displaying a graphic on a graphical user interface.

- Ascertaining an entering of a curve.

- Ascertaining a region of the graphic based on points, the points being located on the entered curve.

Ascertaining a predefined first gesture from the curve,

- Zooming in on the region of the graphic when a gesture is ascertained from the curve.

Consequently, the entering of the curve may synergetically be used for detecting the predefined first gesture instruction - in this case an enlargement with the aid of the gesture - and for ascertaining the region to be enlarged. No additional entering may be required. Due to the entering, the region may be displayed as a new graphic; a pure enlargement may take place, or the enlarged region, which may be displayed as a new graphic, may contain additional information. For example, a vector graphic, e.g. a road map, may display more or less information as a function of a factor for zooming. The factor for zooming may be defined by the size of the graphic and the ascertained region. Due to a specific embodiment of the invention, which is explained in greater detail with reference to the figures, a number of advantages may be achieved, for example the fact that only one single, short entering may be required, so that the entering occupies very little of a driver's attention, and the driver is better able to concentrate on the traffic.

The curve may be entered with the aid of an input device, for example a touch screen, a mouse, a camera or the like. The curve may be a curved line drawn by a finger, curved at least in sections.

The graphic may be displayed as a part of the graphical user interface. In full screen mode, it is also possible for the graphic to completely fill the graphical user interface. The graphic may be a vector graphic or an image. The graphic may have a map, in particular, a road map.

The region may be defined as a rectangle. This permits distortion-free enlargement.

In one embodiment a predefined second gesture may be ascertained from the curve. Zooming out may occur depending on the region of the graphic when the second gesture is ascertained.

According to one embodiment the predefined first gesture and/or the predefined second gesture may have a circle form. The predefined first gesture and the predefined second gesture may differ in a direction of drawing the circle. The region of the graphic may be displayed in an enlarged format when the curve is assignable to a circle. In this case, it is not necessary for the curve to be precisely circular; instead, it is enough for the curve entered as a circle to be distinguishable from any other gesture that may be entered. A closed loop may be drawn by means of the input device, being distinguishable from a hook, rectangular etc..

In one embodiment a zooming out may occur when the curve is assignable to a circle in the counterclockwise direction and a zooming in may occur when the curve is assignable to a circle in the clockwise direction.

In one embodiment a zooming in may occur when the curve is assignable to a circle in the counterclockwise direction and a zooming out may occur when the curve is assignable to a circle in the clockwise direction.

In one embodiment a zoom in factor of the zooming in may depend on a size of the region. In one embodiment a zoom out factor of the zooming out may depend on a size of the region.

According to one embodiment, the region may be ascertained based on a bounding box. Points on the entered curve may define the bounding box. The bounding box may by defined by the points on the entered curve which lie the farthest apart from each other. An axis-aligned bounding box may be ascertained.

In one embodiment, the region may be ascertained based on points on a section of the curve, the section enveloping an area of the graphic.

According to one embodiment, a convex envelope may be ascertained from the points on the curve that are opposite a further point on the curve in the horizontal direction and are opposite a further point on the curve in the vertical direction. According to one embodiment, a convex envelope may be ascertained from the points on the curve that are on the same straight line in the horizontal direction and from the points on the curve that are on the same straight line in the vertical direction. The further points may be measured input points of the drawn curve or estimated by interpolating two measured points of the curve. The region may be ascertained based on the convex envelope. However, points that cannot be assigned another point on the curve in the horizontal or vertical direction may not be taken into account in the ascertaining of the convex envelope. This makes it possible to more precisely capture the region that the user wishes to enlarge.

According to one embodiment the graphic is displayed with an aspect ratio which may be predefined. The aspect ratio is defined as width in the horizontal direction to height in the vertical direction. The aspect ratio of the graphic may depend on the shape of the graphical user interface and a size of an optical display - for example an image projected by a projector, e.g. 16 : 9. The enlarged region may be displayed with the same aspect ratio after enlargement. This makes it possible to avoid distortions in displaying the enlarged region.

According to one embodiment a center of the region may be ascertained. The graphic may be moved in a direction to superpose the center of the region and a center of the graphic displayed in the graphical user interface.

According to one embodiment a starting point of the curve may be estimated. Additionally an end point of the curve may be estimated. The ascertaining of the predefined first gesture and/or the ascertaining of the predefined second gesture may depend on the estimated starting point and/or the estimated end point. From the starting point and the end point a direction of drawing the curve may be estimated. The graphic may be moved depending on the estimated starting point and/or the estimated end point.

According to an additional aspect a navigation system is improved with the features of the independent claim 15. Various refinements are included in the description.

Accordingly, a navigation system which may have an input unit and an arithmetic unit is provided. The input unit may be designed as a touch screen. The arithmetic unit may be designed as a processor.

The input unit and the arithmetic unit may be configured to display a graphic on a graphical user interface (GUI). The input unit and the arithmetic unit may be configured to ascertain an entering of a curve by means of the input unit.

The input unit and the arithmetic unit may be configured to ascertain a predefined first gesture from the entered curve. The input unit and the arithmetic unit may be configured to ascertain the predefined first gesture in a form of a circle.

The input unit and the arithmetic unit may be configured to ascertain a region of the graphic on the basis of points, the points being located on the entered curve. The input unit and the arithmetic unit may be configured to display the region of the graphic in an enlarged format, on the basis of the ascertainment of the gesture. The input unit and the arithmetic unit may be configured to display the region of the graphic in a reduced format, on the basis of the ascertainment of the gesture.

All embodiments may be combined with each other. Some possible combinations are explained in the description of the drawings. However, these possibilities illustrated therein for combining the features are not definitive.

In the drawings:

Figure 1a          shows a graphical user interface (GUI) having a map;

Figure 1b          shows a graphical user interface having a map display of an enlarged region;

Figure 2           shows one embodiment of an entered curve;

Figure 3           shows one embodiment of an entered curve;

Figure 4           shows one embodiment of an entered curve,

Figures 5a and 5b   show one embodiment of an entered curve and an enlargement,

Figures 6a and 6b   show one embodiment of an entered curve and an enlargement, and

Figures 7a and 7b   show one embodiment of a zooming out.

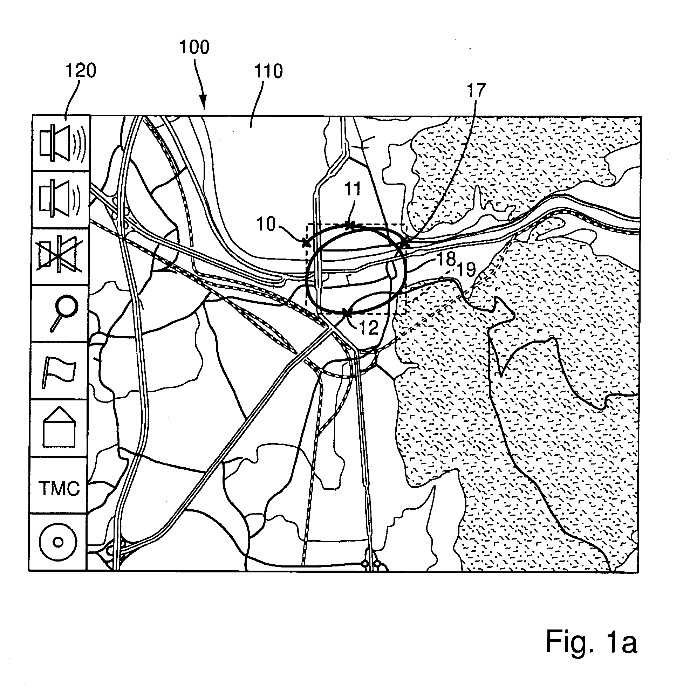

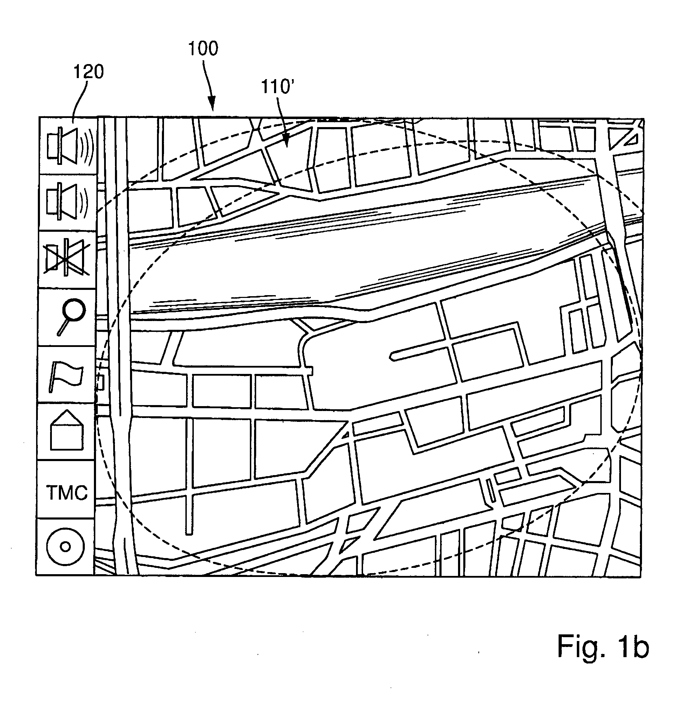

A graphical user interface 100 (GUI) is illustrated schematically in Figure 1. Graphical user interface 100 may have a map display, for example as vector graphic 110, and a toolbar 120 which includes control elements. A plurality of roads and zones may be illustrated in vector graphic 110.

An entered curve 18 may be also illustrated schematically in Figure 1a. Curve 18 illustrated in Figure 1a may also be displayed on a plane over vector graphic 110. Alternatively, a display of curve 18 may be omitted to achieve better visibility of map 110. If curve 18 is entered on a touch screen, for example by means of a finger movement, curve 18 may be determined with the aid of the touch-sensitive surface of the touch screen.

Based on entered curve 18, it may be ascertained whether to assign curve 18 to a predefined first gesture. In the exemplary embodiment in Figure 1a, curve 18 may be compared with a circle. A similarity value between curve 18 and the predefined first gesture may be determined and compared with a threshold value. If curve 18 is sufficiently circular, the gesture "circle" may be detected.

In addition, a region 19 of graphic 110 may be ascertained based on points 10, 11, 12, 17. Points 10, 11, 12, 17 are located on the entered curve 18. In one embodiment in Figure 1a, the curve 18 begins at point 10 and ends at point 17. In addition to points 10 and 17, points 11 and 12 may also be used to ascertain region 19. In one embodiment in Figure 1a, region 19 may be determined as a bounding box, points 10, 11, 12, 17 on entered curve 18 defining the bounding box. The bounding box may be determined by the most remote points 10 and 17 in the horizontal direction and/or by the most remote points 11 and 12 in the vertical direction.

Figure 1b shows how region 19 may be displayed in an enlarged format - as enlarged graphic 110'. Region 19 according to Figure 1a is then enlarged when the gesture (circle) is ascertained from curve 18.

To zoom in to region 19 on map 110, corresponding region 19 that is to be enlarged on the map may be, in the simplest case, encircled (using the mouse or using the finger on the touch screen). Encircling a region 19 for zooming in purposes may be carried out particularly quickly and easily. The user may be able to draw a circular gesture particularly quickly and easily. The explained method for zooming in may be used on a touch screen by simply executing a circular gesture, without it being necessary to press another key. A program run on an arithmetic unit may automatically determine that a zooming in action is desired, based on the type of finger movement as curve 18 on the touch screen. In addition, region 19 may be defined for zooming in by the user based on the drawn curve 18. This action is easy and comfortable for the user to perform. Operation of the zoom function is precise and intuitive for the user. Additionally the size of the region ascertained may define the zoom in factor, so that e.g. a small drawn circle may result in a large zoom in factor and a large drawn circle may result in a small zoom in factor.

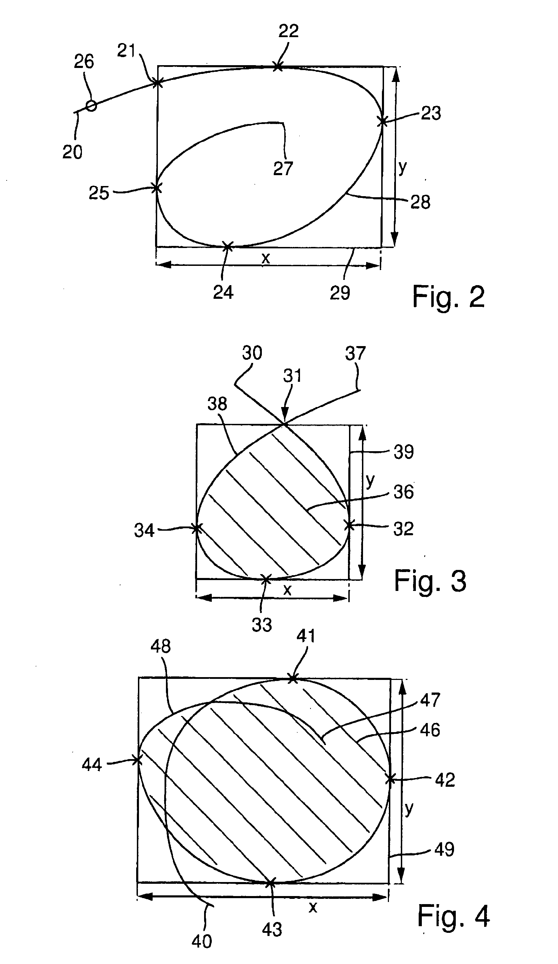

Figure 2 shows a schematic representation of one embodiment for ascertaining a region 29 based on an entered curve 28. Curve 28 may be entered on a plane which extends in horizontal direction and in vertical direction. Point 20 may define the beginning of curve 28, and point 27 may define the end of curve 28. In one embodiment in Figure 2, region 29 may be determined based on an envelope polygon. Only points 21, 22, 23, 24, 25 may be used to determine region 29, these points each being situated opposite one other point on curve 28 in both vertical direction and horizontal direction. E.g. two points are estimated on the curve 28 intersecting a straight line in horizontal direction. E.g. two points are estimated on the curve 28 intersecting a straight line in vertical direction. Region 29 may have the dimension x in the horizontal direction and the dimension y in the vertical direction. Point 26 may not be located opposite any other point on curve 28 in vertical direction, so that point 26 is not taken into account when determining region 29.

Figure 3 shows a schematic representation of one embodiment for ascertaining a region 39 based on an entered curve 38. Point 30 may define the beginning of curve 38 and point 37 may define the end of curve 38. Entered curve 38 in one embodiment in Figure 3 may have an intersection point 31. A section of curve 38 delimited by intersection point 31 may envelope a contiguous area 36. Region 39 may be determined based on the points 31, 32, 33, 34 of the section. Region 39 may have the dimension x in the horizontal direction and the dimension y in the vertical direction. In one embodiment in Figure 3, region 39 may be determined by the two most remote points 31 and 33 in vertical direction and/or by the two most remote points 32 and 34 in horizontal direction.

Figure 4 shows a schematic representation of one embodiment for ascertaining a region 49 based on an entered curve 48. Point 40 may define the beginning of curve 48 and point 47 may define the end of curve 48. Entered curve 48 in one embodiment in Figure 4 has multiple intersection points, so that a contiguous area 46 may again be encompassed by curve 48. Region 49 may be determined based on points 41, 42, 43, 44, which delimit contiguous area 46 in vertical/horizontal directions. Region 49 may have the dimension x in the horizontal direction and the dimension y in the vertical direction.

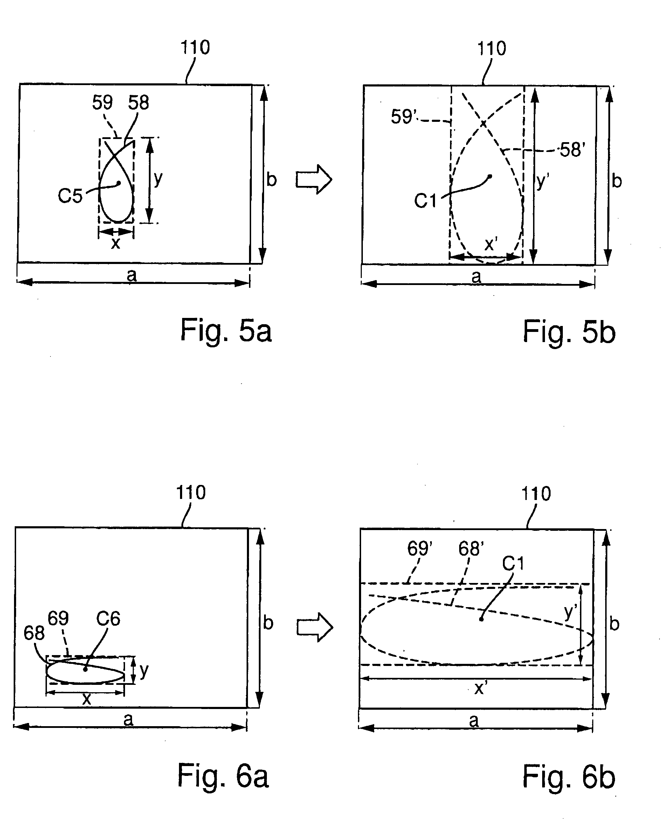

Figures 5a and 5b show one embodiment taking into account the dimension x in the horizontal direction and the dimension y in the vertical direction of region 59. The region 59 is estimated based on the curve 58. The dimension x in horizontal direction may be smaller than the dimension y in vertical direction.

In this case

$$a \cdot x > b \cdot y \qquad\qquad (1)$$

and

$$y' = y \,(b/y) = b \qquad\qquad (2)$$

and

$$x' = x \,(b/y) \qquad\qquad (3)$$

wherein a is the horizontal dimension of the graphic 110 and b is the vertical dimension of the graphic 110. b/y than may determine the zoom factor of the zooming in. The bounding of the region 59 may be displayed shortly before zooming in. During zooming in the center C5 of the region 59 may be moved to the center C1 of the graphic 110 so that they superpose. After zooming in the enlarged region 59' may have the enlarged horizontal dimension x' and the enlarged vertical dimension y'. The enlarged vertical dimension y' may be equal to the vertical dimension b of the graphic 110. Figures 6a and 6b show one embodiment taking into account the dimension x in the horizontal direction and the dimension y in the vertical direction of region 69. The region 69 may be estimated based on the curve 68. The dimension x in horizontal direction may be larger than the dimension y in vertical direction.

In this case

$$a - x < b - y \qquad\qquad (4)$$

and

$$y' = y \,(a/x) \qquad\qquad (5)$$

and

$$x' = x \,(a/x) = a \qquad\qquad (6)$$

wherein a is the horizontal dimension of the graphic 110 and b is the vertical dimension of the graphic 110. a/x than may determine the zoom factor of the zooming in. The bounding of the region 69 may be displayed shortly before zooming in. During zooming in the center C6 of the region 69 may be moved to the center C1 of the graphic 110 so that they superpose. After zooming in the enlarged region 69' may have the enlarged horizontal dimension x' and the enlarged vertical dimension y'. The enlarged horizontal dimension x' may be equal to the horizontal dimension a of the graphic 110.

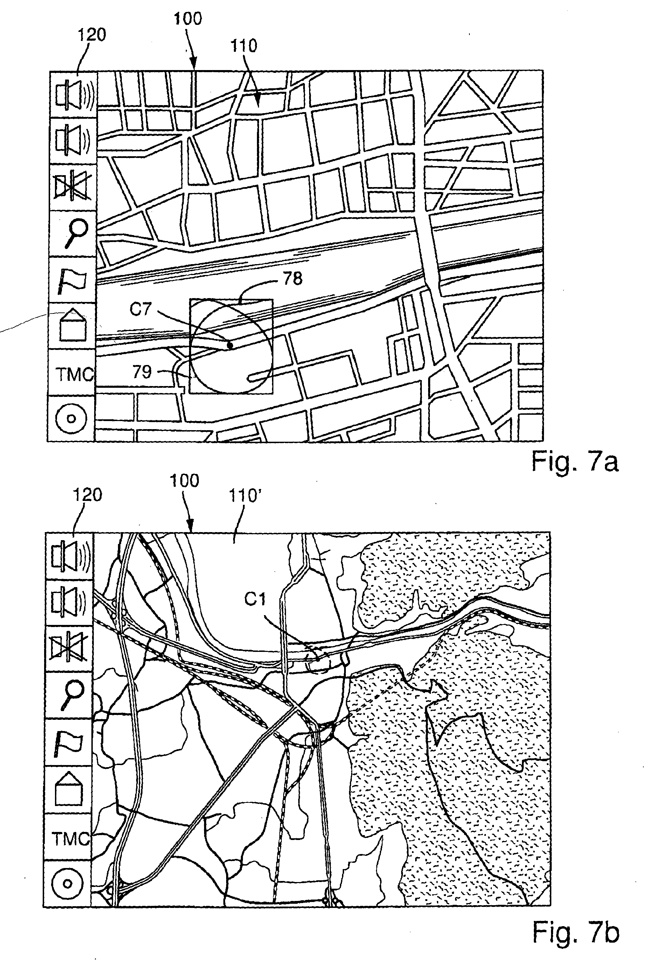

Figures 7a and 7b show one embodiment for zooming out on a map view. In figures 7a and 7b the graphic 110 may be a map showing a vector graphic of roads etc. The map 110 may be displayed on a touch screen. A curve 78 may be drawn in figure 7a. From the curve 78 a region 79 may be estimated. A center C7 of the region 79 may be calculated out of the region 79, e.g. by halving each length. A predefined second gesture may be ascertained from the curve 78. The curve 78 in figure 7a may be a closed loop drawn in counterclockwise direction. According to the ascertaining of the predefined second gesture a zooming out may occur. Before zooming out the region 79 may be displayed. The map 110 may be moved in such a direction that the center C7 of the region 79 may superpose the center C1 of the part of the map displayed. After the zooming out the display of region 79 may disappear, as shown in figure 7b.

The disclosure is not limited to the embodiment variants illustrated in Figures 1a through 7b. For example, it is possible to ascertain the region on the basis of other points on the curve, for example, by points delimiting the region as vertices. The enlarged region may also be displayed in enlarged format only temporarily and reset, for example, by a timeout. Another gesture, for example a gesture in the manner of a triangle, may also be used as an alternative to the circle. It is also possible to use a different input unit, for example a joystick. The functionality may be used for a navigation system.

List of Reference Numerals

| | |
|---|---|
| 10, 11, 12, 17, 20, 21, 22, 23, 24, 25, 26, 27, 30, 31, 32, 33, 34, 37, 40, 41, 42, 43, 44, 47 | Point |
| 18, 28, 38, 48, 58, 68, 78 | Curve |
| 19, 29, 39, 49, 59, 69, 79 | Region |
| 36, 46 | Area |
| 100 | Graphical user interface |
| 110 | Graphic, vector graphic, map |
| 110' | Zoomed in / zoomed out region |
| 120 | Toolbar |
| C5, C6, C7, C1 | Center |
| a, b | Horizontal/vertical size of the graphic |
| x | Horizontal dimension or the region |
| y | Vertical dimension of the region |
| x', y' | Zoomed in dimension of the region |

**Claims**

1.  A method for controlling a display, comprising the steps

    - displaying a graphic (110) on a graphical user interface (100);
    - ascertaining an entering of a curve (18, 28, 38, 48, 58, 68, 78);
    - ascertaining a region (19, 29, 39, 49, 59, 69, 79) of the graphic (110) based on points (10, 11, 12, 17, 21, 22, 23, 24, 25, 31, 32, 33, 34, 41, 42, 43, 44), the points (10, 11, 12, 17, 21, 22, 23, 24, 25, 31, 32, 33, 34, 41, 42, 43, 44) being located on the entered curve (18, 28, 38, 48, 58, 68, 78);
    - ascertaining a predefined first gesture from the curve (18, 28, 38, 48, 58, 68), and
    - zooming in on the region (19, 29, 39, 49, 59, 69) of the graphic (110) when the first gesture is ascertained.

2.  The method according to claim 1,

    - ascertaining a predefined second gesture from the curve (78), and
    - zooming out depending on the region (79) of the graphic (110) when the second gesture is ascertained.

3.  The method according to one of the preceding claims, wherein the predefined first gesture and/or the predefined second gesture has a circle form.

4.  The method according to one of the preceding claims, wherein a zoom in factor of the zooming in depends on a size of the region (19, 29, 39, 49, 59, 69) and/or wherein a zoom out factor of the zooming out depends on a size of the region (79).

5.  The method according to one of the preceding claims, wherein the region (19) is ascertained as a bounding box, and wherein the points (10, 11, 12, 17) on the entered curve (18) define the bounding box.

6.  The method according to one of the preceding claims, wherein the region (39, 49) is ascertained based on points (31, 32, 33, 34, 41, 42, 43, 44) on a section of the curve (38, 48), the section enveloping an area (36, 46) of the graphic (110).

7.  The method according to one of the preceding claims, wherein the region (29) is ascertained based on a convex envelope, the convex envelope being determined from the points (21, 22, 23, 24, 25) on the curve (28),

each of which points is located opposite another point on the curve (28) in the horizontal direction and opposite another point on the curve (28) in the vertical direction,
and/or
each two of which points are located on the curve (28) and on one vertical or horizontal straight line.

8. The method according to one of the preceding claims,
wherein the graphic (110) is displayed with an aspect ratio; and
wherein an enlarged region (110') after the zooming in is displayed with the same aspect ratio.

9. The method according to one of the preceding claims,
wherein the region (19, 29, 39, 49, 59, 69, 79) is rectangular.

10. The method according to one of the preceding claims,
wherein a center (C5, C6, C7) of the region (59, 69, 79) is ascertained.

11. The method according to claim 10,
wherein the graphic (110) is moved in a direction to superpose the center (C5, C6, C7) of the region (59, 69, 79) and a center (C1) of a displayed section of the graphic (110).

12. The method according to one of the preceding claims,
wherein a starting point (20, 30, 40) of the curve (28, 38, 48) is estimated,
and/or
wherein end point (27, 37, 47) of the curve (28, 38, 48) is estimated.

13. The method according to claim 12,
wherein the ascertaining of the predefined first gesture and/or the ascertaining of the predefined second gesture is depending on the estimated starting point (20, 30, 40) and/or the estimated end point (27, 37, 47).

14. The method according to claim 13,
wherein the graphic (110) is moved depending on the estimated starting point (20, 30, 40) and/or the estimated end point (27, 37, 47).

15. A navigation system

     - comprising an input unit and
     - comprising an arithmetic unit,

wherein the input unit and the arithmetic unit are configured:

     - to display a graphic (110) on a graphical user interface (100);
     - to ascertain an entering of a curve (18, 28, 38, 48) by means of the input unit;
     - to ascertain a region (19, 29, 39, 49) of the graphic (110) based on points (10, 11, 12, 17, 21, 22, 23, 24, 25, 31, 32, 33, 34, 41, 42, 43, 44), the points (10, 11, 12, 17, 21, 22, 23, 24, 25, 31, 32, 33, 34, 41, 42, 43, 44) being located on the entered curve (18, 28, 38, 48, 58, 68, 78);
     - to ascertain a first predefined gesture from the entered curve (18, 28, 38, 48, 58, 68);
     - to zoom in on the region (19, 29, 39, 49, 59, 69) of the graphic (110), when the first predefined gesture is ascertained,
     and/or
     - to ascertain a second predefined gesture from the entered curve (78);
     - to zoom out from the region (79) of the graphic (110), when the second predefined gesture is ascertained.

Fig. 1a

Fig. 1b

Fig. 2

Fig. 3

Fig. 4

110

59 58

C5

y

x

b

a

Fig. 5a

110

59'

58'

C1

y'

x'

b

a

Fig. 5b

110

69 C6

68

y

x

b

a

Fig. 6a

110

69' 68' C1

y'

x'

b

a

Fig. 6b

Fig. 7a

Fig. 7b

Europäisches
Patentamt

European
Patent Office

Office européen
des brevets

# EUROPEAN SEARCH REPORT

Application Number

EP 12 00 7003

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/300554 A1 (KALLINEN OTSO [FI]) 3 December 2009 (2009-12-03) * paragraph [0026] * * paragraph [0029]; figures 2-6 * | 1-15 | INV. G06F3/0488 |
| A | US 2010/031188 A1 (LIU PO-HSIEN [TW]) 4 February 2010 (2010-02-04) * figures 1-4 * | 1-15 | |
| A | US 2009/061948 A1 (LEE JIN SANG [KR] ET AL) 5 March 2009 (2009-03-05) * paragraph [0071] - paragraph [0072]; figures 6-8,12 * | 1-15 | |
| A | US 2010/156806 A1 (STALLINGS HEATH [US]) 24 June 2010 (2010-06-24) * paragraph [0038]; figures 5,8B * | 1-15 | |

| | |
|---|---|
| | TECHNICAL FIELDS SEARCHED (IPC) |
| | G06F |

The present search report has been drawn up for all claims

| Place of search | Date of completion of the search | Examiner |
|---|---|---|
| Berlin | 12 April 2013 | Kirsten, Karl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 00 7003

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2013

| Patent document cited in search report | | Publication date | Patent family member(s) | | Publication date |
|---|---|---|---|---|---|
| US 2009300554 | A1 | 03-12-2009 | NONE | | |
| US 2010031188 | A1 | 04-02-2010 | CN US | 101639753 A 2010031188 A1 | 03-02-2010 04-02-2010 |
| US 2009061948 | A1 | 05-03-2009 | KR US | 20090019224 A 2009061948 A1 | 25-02-2009 05-03-2009 |
| US 2010156806 | A1 | 24-06-2010 | US US | 2010156806 A1 2012176335 A1 | 24-06-2010 12-07-2012 |

EPO FORM P0459

**EP 2 720 128 A1**

**Non-patent literature cited in the description**

- Motion Gestures. Apple Computer, Inc, 2005